# EUROPEAN PATENT SPECIFICATION

(11) **EP 4 455 643 B1**
(45) Date of publication and mention of the grant of the patent: **16.09.2026**
(21) Application number: 23176445.7
(22) Date of filing: 31.05.2023
(51) Int. Cl.: G01N 21/65

(54) **METHOD FOR SELECTIVE AND SENSITIVE DETECTION OF GLYPHOSATE USING PLASMON-ENHANCED RAMAN SPECTROSCOPY, ITS USE AND KIT**
VERFAHREN ZUM SELEKTIVEN UND EMPFINDLICHEN NACHWEIS VON GLYPHOSAT MITTELS PLASMONENVERSTÄRKTER RAMAN-SPEKTROSKOPIE, DESSEN VERWENDUNG UND KIT
PROCÉDÉ DE DÉTECTION SÉLECTIVE ET SENSIBLE DU GLYPHOSATE AU MOYEN DE LA SPECTROSCOPIE RAMAN PLASMONIQUE AMPLIFIÉE, SON UTILISATION ET KIT ASSOCIÉ

(30) Priority: 28.04.2023 SK 500282023
(43) Date of publication of application: 30.10.2024
(73) Proprietor: SAFTRA photonics, s.r.o., 040 11 Kosice (SK)
(72) Inventor: MISKOVSKY, Pavol, 821 08 Bratislava 2 (SK); SANCHEZ-CORTES, Santiago, 284 00 Madrid (ES); JURASEKOVA, Zuzana, 080 01 Presov (SK); HOVAN, Andrej, 040 13 Kosice (SK)
(74) Representative: Zakova, Anna

(56) References cited:
- EP-A1- 3 073 251
- DE GOES RAFAEL ELEODORO ET AL: "Tuning of Citrate-Stabilized Laser Ablated Silver Nanoparticles for Glyphosate Detection", IEEE SENSORS JOURNAL, IEEE, USA, vol. 20, no. 4, 28 October 2019 (2019-10-28), pages 1843 - 1850, XP011768596, ISSN: 1530-437X, [retrieved on 20200123], DOI: 10.1109/JSEN.2019.2950161
- SHANG MING ET AL: "A portable kit for rapid detection of bromadiolone in human blood and urine via surface-enhanced raman scattering coupled with salt-induced liquid-liquid phase separation", SENSORS AND ACTUATORS B: CHEMICAL, ELSEVIER BV, NL, vol. 374, 7 October 2022 (2022-10-07), XP087217077, ISSN: 0925-4005, [retrieved on 20221007], DOI: 10.1016/J.SNB.2022.132809
- BHATT V K ET AL: "A new spectrophotometric method for the determination of glyphosate: statistical optimization and application in biodegradation studies", INTERNATIONAL JOURNAL OF ENVIRONMENTAL SCIENCE AND TECHNOLOGY, vol. 18, no. 4, 15 February 2020 (2020-02-15), pages 997 - 1008, XP037397264, ISSN: 1735-1472, DOI: 10.1007/S13762-020-02899-3

## Description

### Field of the invention

The present invention relates to a method for selective and sensitive detection of the herbicide glyphosate, its use to determine the presence and/or quantity, or evaluate the concentration range of glyphosate in a sample, and a kit to carry out the mentioned method.

### State of the art

Environmental pollution, protection and restoration. Clean vs. contaminated water, soil and air and its direct impact on human health and life, on its quality. Specific official guidelines and regulations of governments and other relevant legal institutions are presented more frequently and forcefully on the local, regional and global levels whose observance is exceedingly important for environmental protection, and consequently, for the protection of human health and life. Currently, there is a wide range of chemical substances and products, now also legally defined, the use of which is prohibited or at least significantly restricted.

In general, regulatory and control procedures for determining the concentration levels of various pollutants require long monitoring times, usually using traditional methods: sampling, sending to certified laboratories, and time-consuming and costly analyzes (mostly using gas/liquid chromatography and/or mass spectrometry). However, the results obtained in this way are not always unambiguous, either due to the time-consuming nature of the analyses or to impossibility of avoiding many demanding preparatory procedures.

The problem is also that many of the molecules - important from the point of view of environmental and human health protection possess characteristics that naturally obstacle their selective and sensitive detection. Even more, their detection itself is often a big challenge. It is also the case of glyphosate, a broad-spectrum herbicide used even today relatively commonly and often against weeds (e.g. Roundup product which is also sold and used in the Slovak Republic). During the 20th century, the use of glyphosate increased enormously, mainly due to genetically modified crops and the subsequent higher resistance of plants to its action. This resulted in the gradual accumulation of glyphosate in the environment (soil, water, etc.) as well as in food ingredients and products. The use of glyphosate is not banned currently, but its harmfulness - probable carcinogenicity - is often discussed and the issue of its monitoring is becoming increasingly important from the point of view of the EU and its environmental policy (current European legislation allows use of glyphosate until December 15, 2023).

Raman spectroscopy (RS), especially plasmon-enhanced Raman spectroscopy (PERS), has proven to be a suitable analytical technique for several decades, which provides monitoring or 'on site' quick screening of samples without the need for the (laborious) sample pre-treatment, and which is capable of detecting and distinguishing individual pollutants even in various mixtures and at low concentrations. In addition, it is shown to be a technique that is capable of detecting a wide range of chemicals in the desired ppb-ppm concentration range. However, direct detection of glyphosate using Raman and PERS spectroscopy is significantly limited since these spectra can only be detected at high concentrations of the herbicide. Therefore, there is a need for chemical modification of the glyphosate molecule which can result in a compound - final product - with a characteristic PERS spectrum by which a selective and sensitive detection of glyphosate in an aqueous environment even at low concentrations of glyphosate can be carried out.

The paper from DE GOES RAFAEL ELEODORO ET AL: "Tuning of Citrate-Stabilized Laser Ablated Silver Nanoparticles for Glyphosate Detection",IEEE SENSORS JOURNAL, IEEE, USA, vol. 20, no. 4, 28 October 2019, pages 1843-1850,discloses a method of detection of glyphosate in water. Aqueous glyphosate samples are prepared employing deionized water and then combined with silver nanoparticles in a colloidal solution. The resulting solution is interrogated with a Surface Enhanced Raman Scattering spectrometer in order to determine the glyphosate concentration. This document fails to discloses in particular the mixing of the aqueous solution of the sample containing glyphosate with carbon disulfide in an alkaline environment. The paper from BHATT V K ET AL: "A new spectrophotometric method for the determination of glyphosate: statistical optimization and application in biodegradation studies",INTERNATIONAL JOURNAL OF ENVIRONMENTAL SCIENCE AND TECHNOLOGY, vol. 18, no. 4, 15 February 2020, pages 997-1008, discloses a spectrophotometric method for the determination of glyphosate where a sample containing glyphosate has being reacted with carbon disulfide and copper(II)nitrate in alkaline medium. The yellow colored aqueous phase obtained by this mixing is then investigated by UV-absorption spectroscopy. This method is however not concerned with enhanced Raman spectroscopy.

The shortcomings of the closest prior art mentioned above are solved by the present invention.

### Summary of the invention

The subject of the present invention is a method of detecting glyphosate using plasmon-enhanced Raman spectroscopy (PERS) which is based on a suitable chemical modification of the glyphosate molecule in order to change its chemical structure, so that the modified molecule contains functional groups demonstrating a significantly higher affinity towards the nanostructured (nanoparticle) plasmonic surfaces. In this way, the conditions for the possible detection of glyphosate found in the samples in an aqueous environment using the plasmon-enhanced Raman signal (PERS) will be achieved even at (very) low concentrations of the given herbicide. Taking into account that the PERS detection of the selected environmental pollutants is selective, sensitive, time- and cost-effective technique, thus, it provides an accessible screening method suitable for monitoring the presence of glyphosate in an aqueous environment together with possible quantification of the molecule, and therefore, possible verification of the thresholds of the presence of detected molecules.

The benefit of the present invention is the use of relatively simple technical equipment, inexpensive reagents, time-efficient assessment and the possibility to perform 'on site' analysis at the place of the sample collection, assuming a portable Raman spectrometer is employed.

The subject of the present invention is a method for detection of the herbicide glyphosate using plasmon-enhanced Raman spectroscopy (PERS) which is catalytically mediated by silver plasmonic nanoparticles.

An appropriate chemical modification of the glyphosate molecule in the sense of the present invention is represented by the chemical reaction of an aqueous solution of a sample containing glyphosate with carbon disulfide in an alkaline environment which results in a carbon disulfide-modified glyphosate, which in an acidic environment demonstrates an affinity towards the silver surface in the form of nanoparticles, which is significantly higher than that of the glyphosate molecules, which enables its adsorption on and interaction with the silver nanoparticles even at low concentrations of the glyphosate. Carbon disulfide is preferably used as a solution of carbon disulfide in dimethyl sulfoxide (DMSO) with a concentration of 4% CS₂ (v/v).

Silver nanoparticles are used in the form of AgH colloid which is a silver colloid prepared by chemical reduction of the AgNO₃ using NH₂OH.HCl as a reducing agent; therefore, these are silver plasmonic nanoparticles dispersed in an aqueous environment. The average size of these nanoparticles ranges from 20 to100 nm, the nanoparticles preferably have an average size of 40 nm, and the concentration range of the used silver nanoparticles is about 2x10¹¹ nanoparticles per 1 ml of water. Besides the amplification of the Raman signal, the silver nanoparticles also act as a catalyst for the formation of the final product in an acidic environment.

The term alkaline environment for carrying out the chemical reaction of an aqueous solution of glyphosate with carbon disulfide refers to an environment with a pH in the range from 10 to 12, using an aqueous solution of a strong base, such as sodium hydroxide (NaOH) or potassium hydroxide (KOH).

The term acidic environment in which the adsorption and interaction of carbon disulfide-modified glyphosate with the silver nanoparticles takes place refers to an environment with a pH in the range from 2,5 to 4, wherein an aqueous solution of a strong inorganic acid, such as nitric acid (HNO₃), is used.

The term final product refers to the (5-oxo-(2-thioxothiazolidin-3-yl)methyl)phosphonic acid which can exist in both, oxo- and enol-forms. It has a specific PERS spectrum and corresponds to glyphosate present in the analyzed sample.

PERS detection of the final product can be carried by a Raman spectrometer known from the state of the art, whereby the corresponding spectrum is recorded for the sample in suspension. The employed radiation is selected from the infrared or visible region of the electromagnetic spectrum, i.e. radiation with a wavelength from 500 nm to 800 nm, monochromatic excitation sources with a longer wavelength are preferably used, such as solid-state diode lasers with the excitation wavelength of 785 nm.

In addition to the recording of the Raman spectrum of the final product in suspension, it is also possible - before the analysis of the final product in the spectrometer - to drop only microliter volumes (e.g. 1 µl) of the final product formed in the suspension in the presence of silver nanoparticles onto the surface of the nano-optical chip, which was developed by the applicant and is the subject of the international application no. PCT/IB2018/060065, published under the International Publication Number WO2019/116320A1. This chip consists of a silicon substrate with a deposited layer of gold plasmonic nanoparticles. By dropping the suspension containing both the final product and plasmonic silver nanoparticles onto the surface of the chip a second layer of the nanoparticles is formed which beneficially results in an additional amplification of the PERS signal due to the higher probability of the formation and existence of hot-spots which are responsible for this amplification. The benefit of the use of silicon nano-optical chip, in addition to being portable, is its stability, universality and additional amplification of the measurable signal. Together with the spectrometric equipment, calibration curves and a recorded reference spectrum (developed and supplied by the applicant of this application under the tradenames Ramascope system and Pickmol software, respectively), it also enables an accurate assessment of glyphosate concentrations in the analyzed sample.

It will be clear to those skilled in the art that the term sample in an aqueous environment refers to an aqueous solution; nevertheless, it can also be any solid or gaseous sample that can be transferred into a solution (e.g. can be dissolved) and therefore, it was not primarily a sample in an aqueous environment.

For the correct course of the individual reaction processes, it is important to keep the specified pH ranges, while the temperature and pressure are normal - ambient temperature and atmospheric pressure. The ambient temperature refers to a temperature about 20 °C; however, the corresponding method works reliably in the temperature range from 0 °C (the freezing point of water) to 60 °C, as glyphosate and its various forms demonstrate stability only up to a temperature of 60 °C.

The above-mentioned method can be summarized in the following steps:
a) mixing an aqueous solution of a sample containing glyphosate with carbon disulfide in an alkaline environment to form a carbon disulfide-modified glyphosate;
b) transferring the carbon disulfide-modified glyphosate obtained in step a) into the AgH colloid in an acidic environment giving rise to a final product, (5-oxo-(2-thioxothiazolidin-3-yl)methyl)phosphonic acid;
c) recording of the PERS spectrum of the final product in suspension using a Raman spectrometer and determination of the presence or evaluation of the concentration range of the glyphosate in the sample, or alternatively
d) steps a) and b) are carried out and the microliter volumes of the final product from the step b) (5-oxo-(2-thioxothiazolidin-3-yl)methyl)phosphonic acid present in the suspension together with the silver nanoparticles are dropped onto a chip consisting of a silicon substrate with a deposited layer of gold plasmonic nanoparticles, whereas the silver nanoparticles with the final product form a second layer on the top of the layer of gold nanoparticles; and
e) recording the PERS spectrum of the final product from the surface of a gold nano-optical chip using a Raman spectrometer and determining the presence or the quantity of glyphosate in the sample.

A kit for carrying out the method of detection of glyphosate in samples in an aqueous environment as described above is also described, and the kit comprises:
- a vial for a carbon disulfide solution in an alkaline environment with a pH in the range of 10 to 12 and the corresponding reagents for its preparation;
- a vial for a solution of AgH colloid in an acidic environment with a pH in the range of 2,5 to 4 and the corresponding reagents for its preparation;
- Raman spectrometer;
- optionally a silicon chip with a deposited layer of gold plasmonic nanoparticles; and
- manual.

Due to the fact that the acidic AgH colloid does not remain stable for a long time, it is necessary to provide the appropriate reagents for its preparation in the kit and thus, to prepare the colloid with the required pH only shortly before the glyphosate detection itself. At the same time, there is also a vial in the kit provided, optionally a cuvette, for recording the PERS spectrum of the final product in a suspension, whereas it also serves for the preparation of the colloid with the required characteristics at an appropriate moment.

Similarly, a solution of carbon disulfide in an alkaline environment with the required pH is also prepared shortly before the glyphosate detection itself. Therefore, the kit also provides the corresponding reagents for its preparation as well as an appropriate vial for these purposes.

Even though the present method is not a direct glyphosate detection method and thus a modification of the sample is needed, this sample modification is simple, time- and cost-effective compared to sample (pretreatment required in the state-of-the-art glyphosate detection methods.

### Brief description of drawings

- Figure 1: Schematic representation of the method for the detection of glyphosate in samples in an aqueous environment according to the present invention;
- Figure 2: Presumed simplified mechanism of formation of the final product 5, or 6;

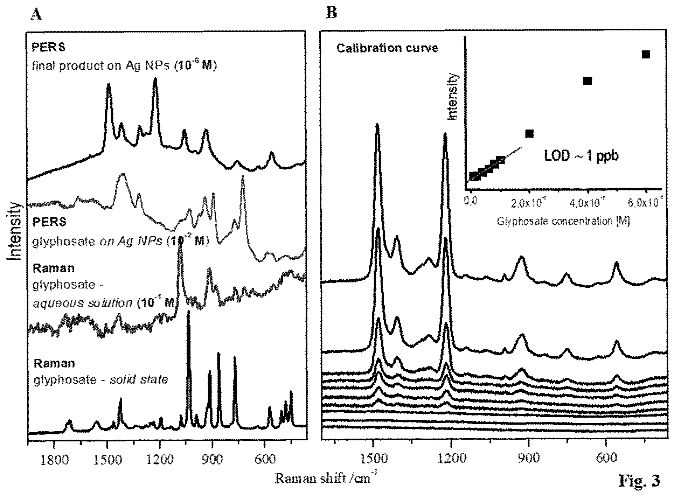

- Figure 3: A Raman spectrum of glyphosate in a solid state, in aqueous solution and in a suspension of silver plasmonic nanoparticles, and PERS spectrum characteristic for the final product.
B An example of the corresponding calibration curve demonstrating the dependence of the signal intensity on the increasing concentration of glyphosate in the concentration range 0 - 6,0x10⁻⁶ M, detection limit (LOD) is about 1 ppb.

The following examples serve to illustrate the present invention; however, the invention should not be limited to them. Those skilled in the art will be able to perform various modifications, variations and changes without departing from the scope of the present application (as defined by the claims). The interpretation of the scope of the claims should be interpreted as a whole and in broadest scope consistent with the specification which is not limited to the specific examples provided.

### Examples

### Example 1

### Detection of glyphosate in a suspension

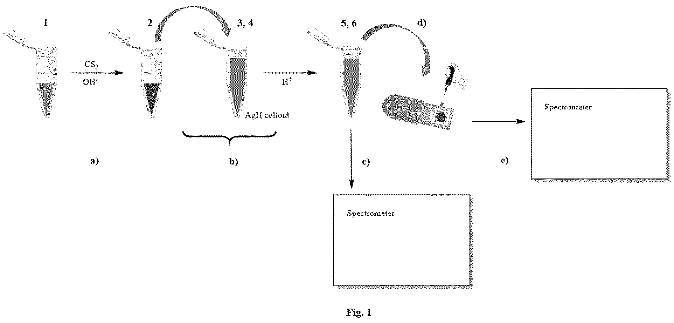

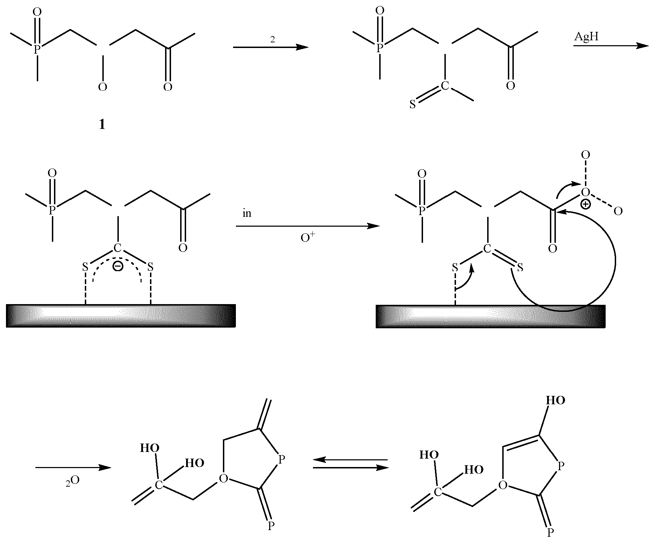

In accordance with Figure 1, 1 ml of an aqueous solution of the sample suspected to contain glyphosate 1 was added to a glass tube containing 50 µl of a carbon disulfide solution in DMSO with a concentration of 4% CS₂ (v/v) in an alkaline environment consisting of 1 M aqueous solution of NaOH (5 µl), with a pH of the reaction mixture about 11, whereas mixing these solutions resulted in the formation of carbon disulfide-modified glyphosate 2. The above-mentioned corresponds to step a) in Figure 1. In this step, the amino group of glyphosate 1 is protected by the reaction of the molecule with carbon disulfide in an alkaline environment. The resulting product, referred to in the previous text as carbon disulfide-modified glyphosate 2, is N-dithiocarboxy-N-(phosphonomethyl)glycine 2, which contains -SH (thiol) and C=S (thio-) functional groups in its structure, which play a major role in a subsequent step b) according to Figure 1. In this step, 10 µl of carbon disulfide-modified glyphosate 2 obtained in step a) was transferred to a glass cuvette containing 1 ml of AgH colloid (prepared by chemical reduction of AgNO₃ using NH₂OH.HCl as a reducing agent) containing silver nanoparticles with an average size of 40 nm dispersed in aqueous solution, at a concentration of about 2x10¹¹ nanoparticles per 1 ml of water, with a pH about 2,5 formed by the addition of 20 µl of a 0,1 M aqueous solution of nitric acid. The incorporated -SH and C=S groups of carbon disulfide-modified glyphosate 2 demonstrate a high affinity towards the silver nanoparticle surface, which enables adsorption of carbon disulfide-modified glyphosate molecule onto the surface of plasmonic silver nanoparticles - such a molecule 3 adsorbed onto the surface of nanoparticles is represented by the reference number 3 in Figure 1. Silver nanoparticles of the AgH colloid also act as a catalyst for the subsequent cyclization of molecule 3 to the final product in an acidic environment, (5-oxo-(2-thioxothiazolidin-3-yl)methyl)phosphonic acid 5, which can exist in oxo- 5 and enol- 6 form. The transition state of molecule 3 to the cyclic form is shown in Figure 1 by the structure marked with reference number 4. Reference numbers 3 and 4 refer to transitional structures (intermediate products) by which it is to be demonstrated the proposed mechanism of formation of the final product 5 or 6. Subsequently, the presence of glyphosate is detected by recording the PERS spectrum of the final product in suspension using a Raman spectrometer - thereby one determines its presence or absence in the examined sample. Based on the evaluation of the intensity of the recorded spectrum, it is possible to perform an initial assessment of the concentration range of the herbicide glyphosate present in the sample.

The given assumed simplified mechanism for the formation of final products 5 or 6, as described above is depicted in Figure 2, whereas used reference numbers 1-6 correspond to the reference numbers in Figure 1.

### Example 2

### Detection of glyphosate after its application onto the surface of a gold nano-optical chip

Aqueous solution of the sample is processed in the same way as in Example 1, with a difference that the PERS spectrum of the final product is not recorded in suspension, but microliter volumes (1 µl) of the suspension is dropped onto a chip consisting of a silicon substrate with a deposited layer of gold plasmonic nanoparticles, whereas the silver nanoparticles with the final product form a second layer on the top of the layer of gold nanoparticles. The above-mentioned corresponds to step d) in Figure 1. The silicon substrate is a silicon wafer with dimensions of 5x5x0,5 mm. A layer of gold nanoparticles is deposited on this silicon wafer by sputtering process with preferred thickness of 50 nm. Transferring the suspension of the final product to the chip can be done by dropping a certain amount of the suspension (e.g. 1µl) onto the chip. Subsequently, the presence of glyphosate is detected by recording the PERS spectrum of the final product from the surface of the chip using a Raman spectrometer - thereby one determines its presence or absence in the examined sample. Based on the evaluation of the intensity of the recorded spectrum, it is possible to determine quantity of the glyphosate in the sample.

### List of reference numbers

1 glyphosate
2 carbon disulfide-modified glyphosate (N-dithiocarboxy-N-(phosphonomethyl)glycine)
3 molecule of the carbon disulfide-modified glyphosate adsorbed on the surface of plasmonic silver nanoparticles
4 molecule of the carbon disulfide-modified glyphosate in the process of cyclization catalyzed by silver nanoparticles
5 final product ((5-oxo-(2-thioxothiazolidin-3-yl)methyl)phosphonic acid) in oxo- form
6 final product ((5-oxo-(2-thioxothiazolidin-3-yl)methyl)phosphonic acid) in enol- form

### Industrial applicability

The present invention, which relates to a method for detection of the herbicide glyphosate in water using PERS spectroscopy and chemical modification of the molecule catalyzed by silver plasmonic nanoparticles since direct glyphosate detection using silver nanoparticles is significantly limited allows detecting glyphosate at low concentrations, whereas identification of the glyphosate is carried out on the basis of the specific PERS spectrum, i.e. it is a highly sensitive and selective detection method. In addition, the relative intensity of the recorded Raman (PERS) signal allows the use of this fast and soft screening analysis for an initial assessment of the concentration range of the herbicide present, or the determination of its quantity.

## Claims

1. Method for selective and sensitive detection of glyphosate using plasmon-enhanced Raman spectroscopy, **characterized in that** it comprises the following steps:
a) mixing an aqueous solution of a sample containing glyphosate with carbon disulfide in an alkaline environment to form a carbon disulfide-modified glyphosate;
b) transferring the carbon disulfide-modified glyphosate obtained in step a) into the AgH colloid in an acidic environment giving rise to a final product, (5-oxo-(2-thioxothiazolidin-3-yl)methyl)phosphonic acid;
c) detection of glyphosate and recording of the PERS spectrum of the final product in suspension using a Raman spectrometer and determination of the presence and/or evaluation of the concentration range of the glyphosate in the sample, or alternatively
d) steps a) and b) are carried out and the microliter volumes of the final product from the step b) (5-oxo-(2-thioxothiazolidin-3-yl)methyl)phosphonic acid are dropped onto a chip consisting of a silicon substrate with a deposited layer of gold plasmonic nanoparticles, whereas the silver nanoparticles with the final product form a second layer on the top of the layer of gold nanoparticles; and
e) detection of glyphosate by recording the PERS spectrum of the final product from the surface of a gold nano-optical chip using a Raman spectrometer and determining the presence and/or the quantity of glyphosate in the sample.

2. Method according to claim 1, **characterized in that** the alkaline environment in step a) has a pH in the range from 10 to 12.

3. Method according to any of the preceding claims, **characterized in that** the alkaline environment in step a) refers to an aqueous solution of a strong base, preferably a 1M aqueous solution of sodium hydroxide.

4. Method according to any of the preceding claims, **characterized in that** carbon disulfide is used as a solution of carbon disulfide in dimethyl sulfoxide (DMSO) with a concentration of 4% CS₂ (v/v).

5. Method according to any of the preceding claims, **characterized in that** pH of the acidic environment in step b) is in the range from 2,5 to 4,0.

6. Method according to any of the preceding claims, **characterized in that** AgH colloid consists of Ag nanoparticles dispersed in aqueous environment and having average nanoparticle size in the range from 20 to 100 nm, preferably 40 nm.

7. Method according to claim 6, **characterized in that** the concentration of the Ag nanoparticles in AgH colloid is about 2x10¹¹ nanoparticles per 1 ml of water.

8. Method according to any of the preceding claims, **characterized in that** the acidic environment in the step b) refers to an aqueous solution of a strong inorganic acid, preferably a 0,1M aqueous solution of nitric acid.

9. Method according to any of the preceding claims, **characterized in that** detection of the final product, (5-oxo-(2-thioxothiazolidin-3-yl)methyl)phosphonic acid, using a Raman spectrometer is carried out at the wavelength of the radiation selected from the infrared or visible region of the electromagnetic spectrum.

10. Use of the method according to any of the preceding claims for determining the presence and/or quantity, or evaluating the concentration range of the glyphosate in the analysed sample.

## Patentansprüche

1. Verfahren zum selektiven und empfindlichen Nachweis von Glyphosat mittels plasmonenverstärkter Raman-Spektroskopie, **dadurch gekennzeichnet, dass** dieses die wie folgt umfasst:
a) Vermischung einer wässrigen Lösung der glyphosathaltigen Probe mit Schwefelkohlenstoff in einem basischen Medium zur Bildung von mit Schwefelkohlenstoff modifiziertem Glyphosat;
b) Übertragung des in Schritt a) erhaltenen, mit Schwefelkohlenstoff modifizierten Glyphosats in ein AgH-Kolloid in saurer Umgebung unter Bildung des Endprodukts (5-Oxo-(2-Thioxothiazolidin-3-yl)methyl)phosphonsäure;
c) Nachweis von Glyphosat und Ermittlung des PERS-Spektrums des Endprodukts aus der Suspension mittels eines Raman-Spektrometers und Bestimmung der Präsenz und/oder Auswertung des Konzentrationsbereichs von Glyphosat in der Probe, oder alternativ
d) die Schritte a) und b) werden durchgeführt und das Endprodukt aus Schritt b) (5-Oxo-(2-Thioxothiazolidin-3-yl)methyl)phosphonsäure wird in Mikrolitervolumina auf einen Chip getropft, der aus einem Siliziumsubstrat mit einer darauf abgeschiedenen Schicht aus plasmonischen Gold-Nanopartikeln besteht, auf der die Silber-Nanopartikel mit dem Endprodukt eine zweite Schicht bilden;
e) Nachweis von Glyphosat durch die Ermittlung des PERS-Spektrums des Endprodukts aus der Oberfläche eines optischen Gold-Nanochips mittels eines Raman-Spektrometers und Bestimmung der Präsenz und/oder der Menge von Glyphosat in der Probe.

2. Verfahren nach Anspruch 1, **dadurch gekennzeichnet, dass** das basische Medium in Schritt a) den pH-Wert im Bereich von 10 bis 12 hat.

3. Verfahren nach einem der vorstehenden Ansprüche, **dadurch gekennzeichnet, dass** das basische Medium in Schritt a) eine wässrige Lösung einer starken Base, vorzugsweise eine 1M wässrige Natriumhydroxidlösung darstellt.

4. Verfahren nach einem der vorstehenden Ansprüche, **dadurch gekennzeichnet, dass** der Schwefelkohlenstoff in Form einer Lösung in Dimethylsulfoxid mit der Konzentration von 4 % CS₂ (Vol./Vol.) verwendet wird

5. Verfahren nach einem der vorstehenden Ansprüche, **dadurch gekennzeichnet, dass** der pH-Wert der sauren Umgebung in Schritt b) im Bereich von 2,5 bis 4,0 liegt.

6. Verfahren nach einem der vorstehenden Ansprüche, **dadurch gekennzeichnet, dass** das AgH-Kolloid durch die in einem wässrigen Medium dispergierten und eine mittlere Größe im Bereich von 20 nm bis 100 nm, vorzugsweise 40 nm aufweisenden Ag-Nanopartikel gebildet ist.

7. Verfahren nach Anspruch 6, **dadurch gekennzeichnet, dass** die Konzentration der Ag-Nanopartikel im AgH-Kolloid etwa 2 × 10¹¹ Nanopartikel/ml wässriges Mediums beträgt.

8. Verfahren nach einem der vorstehenden Ansprüche, **dadurch gekennzeichnet, dass** das sauere Medium in Schritt b) eine wässrige Lösung einer starken anorganischen Säure, vorzugsweise eine 0,1M wässrige Salpetersäure darstellt.

9. Verfahren nach einem der vorstehenden Ansprüche, **dadurch gekennzeichnet, dass** der Nachweis des Endprodukts, (5-Oxo-(2-thioxothiazolidin-3-yl)methyl)phosphonsäure mittels eines Raman-Spektrometers bei einer aus dem infraroten oder sichtbaren Bereich des Spektrums ausgewählten Strahlungswellenlänge erfolgt.

10. Verwendung des Verfahrens nach einem der vorstehenden Ansprüche zur Bestimmung der Präsenz und/oder der Menge, oder zur Bewertung des Konzentrationsbereichs von Glyphosat in einer analysierten Probe.

## Revendications

1. Procédé de détection sélective et sensible du glyphosate au moyen de la spectroscopie Raman plasmonique amplifiée, **caractérisé en ce qu'**elle comporte les phases suivantes :
a) mélange de la solution aqueuse de l'échantillon contenante glyphosate avec le sulfure de carbone dans le milieu alcalin pour donner le glyphosate modifié par le sulfure de carbone ;
b) transfert du glyphosate modifié par le sulfure de carbone obtenu dans la phase a) dans le colloïde d'AgH dans le milieu acide, pour donner le produit final, l'acide (5-oxo-(2-thioxothiazolidine-3-yl)méthyl)phosphonique ;
c) détection du glyphosate et l'enregistrement du PERS spectre du produit final à partir de la suspension à l'aide du spectromètre Raman et la détection de présence et/ou l'évaluation de la gamme de concentration du glyphosate dans l'échantillon ou alternativement
d) passant à la réalisation des phases a) et b) et le produit final de la phase b) l'acide (5-oxo-(2-thioxothiazolidine-3-yl)méthyl)phosphonique est ajouté par gouttes de volumes en microlitres sur une microplaquette composée de la matière à la base du silicium recouverte de la couche de nanoparticules d'or plasmoniques, sur laquelle les nanoparticules d'argent ensemble avec le produit final donnent la création d'une deuxième couche ;
e) détection du glyphosate par l'enregistrement du PERS spectre du produit final à partir de la surface de la microplaquette nanooptique d'or à l'aide du spectromètre Raman et la détection de présence et/ou de quantité du glyphosate dans l'échantillon.

2. Procédé selon la revendication 1, **caractérisé en ce que** le milieu alcalin dans la phase a) a un pH compris entre 10 et 12.

3. Procédé selon l'une quelconque des revendications précédentes, **caractérisé en ce que** le milieu alcalin dans la phase a) est créé de la solution aqueuse d'une base forte, avantageusement de la solution aqueuse d'hydroxyde de sodium à 1 M.

4. Procédé selon l'une quelconque des revendications précédentes, **caractérisé en ce que** le sulfure de carbone est utilisé en forme de la solution dans le diméthylsulfoxyde de concentration de 4 % en CS₂ (vol./vol.)

5. Procédé selon l'une quelconque des revendications précédentes, **caractérisé en ce que** le pH du milieu acide de la phase b) est compris entre 2,5 et 4,0.

6. Procédé selon l'une quelconque des revendications précédentes, **caractérisé en ce que** le colloïde d'AgH est constitué des nanoparticules d'Ag dispersées dans le milieu aqueux dont la taille moyenne est comprise entre 20 nm et 100 nm, avantageusement 40 nm.

7. Procédé selon la revendication 6, **caractérisé en ce que** la concentration des nanoparticules d'Ag dans le colloïde d'AgH est d'environ 2 x 10¹¹ de nanoparticules/ml du milieu aqueux.

8. Procédé selon l'une quelconque des revendications précédentes, **caractérisé en ce que** le milieu acide dans la phase b) est créé de la solution aqueuse d'un acide inorganique fort, avantageusement de la solution aqueuse de l'acide nitrique à 0,1 M.

9. Procédé selon l'une quelconque des revendications précédentes, **caractérisé en ce que** la détection du produit final, l'acide (5-oxo-(2-thioxothiazolidine-3-yl)méthyl)phosphonique par le spectromètre Raman est effectuée par le biais de la longueur d'onde de radiation choisie du spectre infrarouge ou visible.

10. L'utilisation du procédé selon l'une quelconque des revendications précédentes aux fins de la détection de présence et/ou de quantité, ou même d'évaluation de la gamme de concentration du glyphosate dans l'échantillon analysée.
